# EUROPÄISCHE PATENTANMELDUNG

(11) **EP 1 642 672 A2**
(43) Veröffentlichungstag der Anmeldung: **05.04.2006**
(21) Anmeldenummer: 05468013.7
(22) Anmeldetag: 25.08.2005
(51) Int. Cl.: B23P 21/00, B23Q 39/04

(54) **Karussell-Montagelinie**

(30) Priorität: 31.08.2004 SI 200400237
(71) Anmelder: Bonifarti, Jozef, 9262 Rogasovci (SI)
(72) Erfinder: Bonifarti, Jozef, 9262 Rogasovci (SI)

(57) **Zusammenfassung**

Die Karussell-Montagelinie oder zirkulare Montage- Bearbeitungs- und Wartungsvorrichtung dient Produktionsbetrieben und Servicewerkstätten als steuerbare Einrichtung zur Positionierung und Rundförderung von Werkstücken zur manuellen oder maschinell unterstützten Bearbeitung.

Mehrere in definierten Winkeln und Radialabständen um eine Drehachse verteilte hängend montierte und höhenverstellbare Arbeitsplattformen, welche um die senkrechte Hängeachse drehbar sind, erlauben Bodenfreiheit bei optimaler Raumausnutzung.

Dazu werden an ein Trag-Gerüst mit mindestens drei Stützen und geeigneter Anzahl von Tragelementen über ein zentrales Axiallager radiale Führungsarmen und kreisförmigen oder Sektor verbindende Konstruktionsteile drehbar befestigt und vorzugsweise elektronisch gesteuert motorisch angetrieben. In geeigneten Winkelabständen sind die Arbeitsplattformen an das drehbare Gerüst angebracht. Jede Arbeitsplattform bietet optimale Positionierbarkeit. Ebenso sind Versorgungsanschlüsse für Strom und elektronische Daten-Kommunikationseinrichtungen für jeden Platz vorgesehen.

## Beschreibung

Die KARUSSELL - MONTAGELINIE ist eine Erfindung für den Anlagenbau. Speziell handelt es sich um eine besondere Konstruktion zur Bereitstellung von Arbeitsplattformen/Vorrichtungen in Produktionsbetrieben oder Service-Werkstätten. Die Anwendung der Vorrichtung reicht von Fertigungsbetrieben und Wartungs-Einrichtungen für kleine bis mittlere Halbzeuge oder Fertigteile der mechanischen, elektrischen oder elektronischen Industrie, z.B. der Zweiradindustrie.

Andere Anwendungsgebiete: Automobil-, Holz-, Elektronik-Industrie, Reparatur- und Servicewerkstätten, Lackierereien, Uhren- und Schmuckindustrie.
Inspektion, Zusammenbau, Zerlegearbeiten (Recycling), Bearbeitung (Bemalen, Fräsen, Bohren, Nieten, Löten, Schweißen, Schleifen, Justieren wird dabei optimal unterstützt.

### Stand der Technik

Bekannt sind Montagelinien mir mehreren meist linearen Anordnungen, wie Förderbänder, Rollbänder, Paletten-systeme, Bodenförderer, Arbeitsflächen wie Arbeitstischen, manchmal auch hängend angeordnete Arbeitstische (Hängebahnen), die auch über bewegliche Einrichtungen wie Schwenkarme oder durch Führungsschienen in bestimmte Arbeitspositionen gebracht werden können, mit jeweiliger Steuerung am Arbeitplatz. Weiters bekannt sind Vorrichtungen wie Hebebühnen für Krafträder mit speziellen Fixiervorrichtungen. Ebenso können Arbeitsmittel wie Schlauchführungen für Lackier- und Reinigungseinrichtungen an Decken montiert und auch im Kreis beweglich gefunden werden. Karussells auf Vergnügungsparks verwenden primär diese Technologien. Daneben existieren viele einzelne Anordnungen von Schienensystemen mit motorischer Führung welche an Gebäudedecken montiert sind. FR 2 693 707 beschreibt ein Karussell zum Transport verschiedener Objekte. Die Anordnung ist dabei bodennahe ausgeführt.

Nachteilig sind bei allen gängigen Anlagen, meist das Fehlen von Bodenfreiheit, oft schlechte Zugänglichkeit der Anlagen von allen Seiten, fehlende Bewegungsfreiheit in der Hallenmitte, geringe Flexibilität oder Variierbarkeit, höherer Aufwand für Reinhaltung der Arbeitsplätze, weniger Licht. Es gibt kaum Gesamtsysteme, meist werden Einzelplattformlösungen angeboten und auf Rollen oder fest im Raum montiert.

Gesucht war eine Flexible, Preigünstige, Robuste, Wartungsarme und ergonomische Anordnung von Arbeitsplätzen, mit der Möglichkeit der völligen Begehbarkeit des Arbeitsraumes und mit einstellbahre Leistung. Eine vordefinierbare Anzahl von ähnlichen Arbeitsplattformen, soll über Bewegungsvorrichtungen ihre Position stetig oder in Intervallen längs einer geschlossenen Kurve im Uhrzeigersinn oder Gegenuhrzeigersinn in gleichen Winkelabständen zueinander bezogen auf den Raumboden veränderbar sein.

### Lösung der Aufgabe

Die Aufgabenstellung wurde dadurch gelöst, dass ein karussell-artiger Aufbau geschaffen wurde mit einem äußeren Traggerüst (Stahlkonstruktion 4), welches auf äußeren Pfeilern gestützt ist (oder an Gebäudewände montiert ist). Dazu wird drehbar über ein Axiallager zentral gelagert ein weiteres Gerüst (Stahlkonstruktion 2) angeordnet, welches über senkrechte Halteachsen die Arbeitsplattformen zur Verfügung stellt. Diese weisen eine waagrechte Arbeitsfläche, eventuell Befestigungsvorrichtungen für das Bearbeitungsgut und Vorrichtungen zum Ablegen oder Entnehmen für die Werkzeuge und Arbeitsmittel auf. Jede Arbeitsplattform kann Stromanschlüsse und Datenübertragungs- oder Kommunikationseinrichtungen aufweisen, die über die senkrechten Halteachsen von oben und über Schleifkontakte über das zentrale Lager zugeführt werden. Durch mechanische, motorische, pneumatische oder hydraulische Vorrichtungen können die Arbeitsplattformen beliebig vertikal bewegt werden, wodurch entweder die optimale Arbeitshöhe oder die optimal Verstauungshöhe unterhalb der Gebäudedecke eingestellt werden kann. So können beispielsweise im letzteren Fall ungenützte Plattformen hoch über Kopf plaziert sein, und aufrechtes Passieren des Personals des Raumes darunter zulassen. Ist keine Plattform in Verwendung, kann der Raum auch zwischenzeitlich für andere Zwecke dienen (Betriebsversammlung, Veranstaltung oder dergleichen).

Neben der Hubfunktion kann die vertikale Halteachse auch eine Drehfunktion in bestimmtem Winkelbereich oder voll rechts- und links rotierbar aufweisen und/oder Neigung der Arbeitsplatte. Dies erlaubt für Mensch und/oder Maschine einen optimalen Zugang zum Werkstück.

Vorteilhaft für die Ausführung ist, dass mindestens eine Rollenvorrichtung an der drehbaren Stahlkonstruktion 2 montiert ist, und ein Führungsprofil an der örtlich fixierten Stahlkonstruktion 4 montiert ist und/oder umgekehrt mindestens eine Rollenvorrichtung an der örtlich fixierten Stahlkonstruktion 4 montiert ist, und ein Führungsprofil an der drehbaren Stahlkonstruktion 2 montiert ist.

Ein zusätzlicher Komfort ist durch die Ausführung gegeben, welche mindestens eine Rollenvorrichtung mit einem motorischer Roll-Antrieb vorsieht, der die relative Winkellage der drehbaren Stahlkonstruktion zur örtlich fixierten Stahlkonstruktion über eine Steuervorrichtung schrittweise, kontinuierlich oder um vorzugsweise durch die Zahl und Position der Arbeitsplattformen 1 definierte Winkellage definierte Winkel verändert.

Ein weiteres Merkmal der Erfindung ist durch das Führen von Stromversorgungs- und/oder mindestens einer Datenleitung und/oder mindestens eine Kommunikations-Leitung über ein Schleifkontaktsystem 9 oder dergleichen zu mindestens einer Arbeitsplattform 1 gegeben, wobei das Schleifkontaktsystem 9 vorzugsweise in der Drehachse und/oder am Rand der Vorrichtung angeordnet ist.

Ein weitere vorteilhaftes Ausführungsmerkmal ist durch eine Einrichtung 7 zur Höhenverstellung mindestens einer Arbeitsplattform 1 gegeben.

Ebenso dient eine Einrichtung 12 zur drehbaren Lagerung mindestens einer Arbeitsplattform 1 um eine vertikale Achse vorzugsweise mit einer Fixiereinrichtung 13 zum Feststellen dem Komfort.

Die Erfindung wird anhand der beiliegenden Zeichnungen näher erklärt. Es zeigen:
Abb. 1 eine typische Anordnung der zirkularen Montage-, Bearbeitungs- und Wartungsvorrichtung mit beispielsweise 10 Arbeitsplattformen in Isometrie.
Abb.2 und Abb.3 zeigen die beiden Ansichten des Ausfiihrungsbeispiels von Abb.1 in Seitenansicht.
Abb.4 zeigt Ansicht von oben.
Abb.5 zeigt ein Ausführungsbeispiel einer Arbeitsplattform.

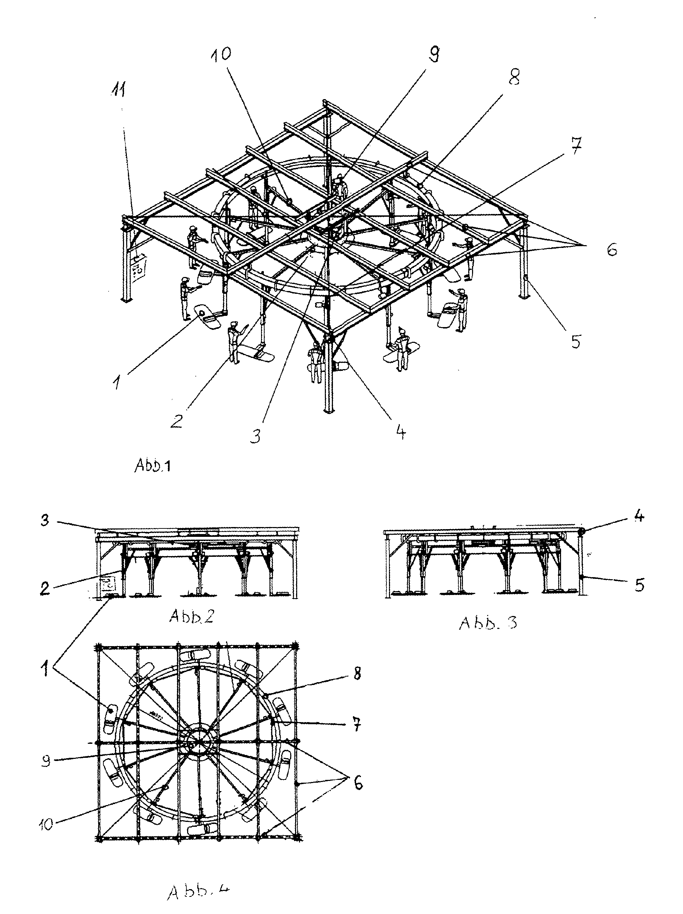

Die Arbeitsplattformen im Ausführungsbeispiel, wie in Abb. 1 bis Abb.4 dargestellt, sind in konstanten Winkelabständen zueinander positioniert. Die Größe ist derart dimensioniert, dass an jeder Plattform zumindest ein Arbeiter darauf liegende Gegenstände ergonomisch bearbeiten kann. Durch die senkrechte hängende Montage der Arbeitsplattformen, ist ein das Herumgehen möglich. Drehfunktionen sowie Hebe- und Senkvorrichtungen erhöhen den Komfort. Dadurch kann vom Standort des Bearbeiters mit oder durch eine zentrale Steuervorrichtung jeder Arbeitsplatz den Erfordernissen angepasst werden. Ohne Berührung des Werkstückes kann dieses um eine vertikale Achse gedreht und über Kopf angehoben werden. Ein Zugang von unten sowie von jeder Seite ist möglich. In diesem Beispiel sind durch die Plattformen zehn Arbeitsorte gegeben, die von 1 oder mehr Personen betreut werden können. In Fertigungen können aber auch verschiedene Arbeitsschritte für verschiedene Arbeiter zugeordnet werden, wodurch Akkordarbeit möglich ist, aber auch der Einsatz von Bearbeitungsmaschinen und Robotern. Die Zuführung erfolgt stets durch die Rotation. Heben und Senken der Plattformen erlaubt zudem das Überqueren von Hindernissen, wie Materialschränke oder Bearbeitungsmaschinen, welche im Raum vorhanden sein können.

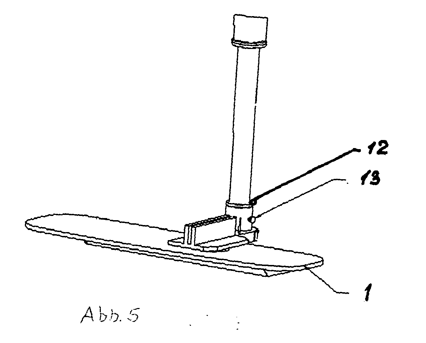

Abb.5 zeigt eine einfache Grundausführung der Arbeitsplattform. Diese weist eine horizontale Stabile Platte auf sowie eine Verbindungseinrichtung zur beweglichen Stahlkonstruktion.

Die Ausführungen sind vielfältig und weichen von der gezeigten Variante durch folgende Merkmale ab: Zahl der Plattformen, Bedienungskomfort (keine, manuelle oder hilfskraftunterstützte Höhenverstellung, keine, manuelle, oder hilfskraftunterstützte Drehwinkelverstellung zur Karussellachse), automatische/manuelle oder hilfskraftunterstützte Drehwinkel-, Höhen und Neigungs-verstellung der Arbeitsplattformen/Vorrichtungen auf Arbeitsplattformen.

## Patentansprüche

1. Karussell-Montagelinie, die als zirkulare Montage-, Bearbeitungs- und Wartungsvorrichtung dient, **dadurch gekennzeichnet, dass** mindestens zwei Arbeitsplattformen (1) an eine Stahlkonstruktion (2) angebracht sind, welche mit einer zweiten örtlich fixierten Stahlkonstruktion (4) über mindestens ein Lager (3) drehbar gelagert ist.

2. Vorrichtung nach Anspruch 1, **dadurch gekennzeichnet, dass** die örtlich fixierte Stahlkonstruktion (4) mit Gebäudewänden und/oder einer Gebäudedecke verbunden ist, und/oder auf tragenden Stützen außerhalb des Arbeitsbereiches montiert ist.

3. Vorrichtung nach Anspruch 1 oder 2, **dadurch gekennzeichnet, dass** mindestens eine Rollenvorrichtung an der drehbaren Stahlkonstruktion (2) montiert ist, und ein Führungsprofil an der örtlich fixierten Stahlkonstruktion (4) montiert ist und/oder umgekehrt mindestens eine Rollenvorrichtung an der örtlich fixierten Stahlkonstruktion (4) montiert ist, und ein Führungsprofil an der drehbaren Stahlkonstruktion (2) montiert ist.

4. Vorrichtung nach Anspruch 3, **dadurch gekennzeichnet, dass** mindestens eine Rollenvorrichtung ein motorischer Roll-Antrieb ist, der die relative Winkellage der drehbaren Stahlkonstruktion zur örtlich fixierten Stahlkonstruktion über eine Steuervorrichtung schrittweise, kontinuierlich oder um vorzugsweise durch die Zahl und Position der Arbeitsplattformen (1) definierte Winkellage definierte Winkel verändert.

5. Vorrichtung nach mindestens einem der Ansprüche 1 bis 4, **dadurch gekennzeichnet, dass** über ein Schleifkontaktsystem (9) oder dergleichen zu mindestens einer Arbeitsplattform (1) eine Stromversorgungs- und/oder mindestens eine Datenleitung und/oder mindestens eine Kommunikations-Leitung geführt ist, wobei das Schleifkontaktsystem (9) vorzugsweise in der Nähe der Drehachse der Vorrichtung angeordnet ist.

6. Vorrichtung nach mindestens einem der Ansprüche 1 bis 5, **dadurch gekennzeichnet, dass** eine Einrichtung (7) zur Höhen- und/oder Neigungs-verstellung mindestens einer Arbeitsplattform (1) vorgesehen ist.

7. Vorrichtung nach mindestens einem der Ansprüche 1 bis 6, **dadurch gekennzeichnet, dass** eine Einrichtung (12) zur drehbaren Lagerung mindestens einer Arbeitsplattform (1) um eine vertikale Achse vorgesehen ist, und vorzugsweise eine Fixiereinrichtung (13) zum Feststellen vorgesehen ist.
